(19) Europäisches Patentamt
European Patent Office
Office européen des brevets

(11) Veröffentlichungsnummer: 0 134 756
A2

# (12) EUROPÄISCHE PATENTANMELDUNG

(21) Anmeldenummer: 84810366.9

(22) Anmeldetag: 24.07.84

(51) Int. Cl.[4]: C 08 L 33/26
D 21 H 3/38, D 21 H 3/02

(30) Priorität: 30.07.83 DE 3327600

(43) Veröffentlichungstag der Anmeldung: 20.03.85 Patentblatt 85/12

(84) Benannte Vertragsstaaten: AT BE CH DE FR GB IT LI NL SE

(71) Anmelder: SANDOZ AG
Lichtstrasse 35
CH-4002 Basel(CH)

(84) Benannte Vertragsstaaten: BE CH FR GB IT LI NL SE

(71) Anmelder: SANDOZ-PATENT-GMBH
Humboldtstrasse 3
D-7850 Lörrach(DE)

(84) Benannte Vertragsstaaten: DE

(71) Anmelder: SANDOZ-ERFINDUNGEN
Verwaltungsgesellschaft m.b.H.
Brunner Strasse 59
A-1235 Wien(AT)

(84) Benannte Vertragsstaaten: AT

(72) Erfinder: Danner, Bernard
8bis rue du Beau Site
F-68400 Riedisheim(FR)

(72) Erfinder: Runyon, James Ross
Konsumstrasse 5
CH-4104 Oberwil(CH)

## (54) Copolymerisat- und tensidhaltige Präparate, deren Herstellung und Verwendung.

(57) Die Erfindung betrifft öl-, polymerisat- und tensidhaltige Präparate, die

(a) ein wasserlösliches kationisches Copolymerisat aus 0,2-9 Mol% Monomeren der Formel (I) und 91 bis 99, 8 Mol% Acryl- und/oder Methacrylamid
(b) ein anionaktives Tensid

wobei der molare Anteil an anionaktivem Tensid (b) nicht grösser ist als der molare Anteil an kationischen Monomereinheiten vom Copolymerisat (a), und

(c) mit Wasser nicht mischbare Oele, worin das Polymerisat nicht löslich ist, aber darin fein verteilt ist

enthalten und gegebenenfalls noch weitere Zusätze enthalten können, insbesondere

(d) öllösliche, nicht-ionogene Tenside
(e) Wasser und
(f) polare öllösliche Lösungsmittel, die in Wasser nicht selbstdispergierbar sind und in Wasser sehr wenig löslich sind und alleine auch keine Emulgatoreigenschaften besitzen, aber die Grenzflächenspannung Wasser/Oel erniedrigen;

weiter betrifft die Erfindung die Herstellung der Präparate, deren Verdünnung, die Verwendung der Präparate als Flockungsmittel und die Herstellung von Papier durch Einsatz solcher Flockungsmittel.

EP 0 134 756 A2

Copolymerisat- und tensidhaltige Präparate, deren Herstellung und Verwendung

---

Hydrophile, d.h. in Wasser lösliche oder dispergierbare, kationische Polymerisate werden heutzutage in der Technik, als Flockungsmittel, z.B. zur Herstellung von Papier, vermehrt eingesetzt und werden häufig in Form von wässrigen Präparaten, insbesondere auch von W/O-Emulsionen gehandhabt. So werden z.B. kationische Acrylamidcopolymerisate als Flockungsmittel u.a. für die Herstellung von Papier eingesetzt; ein wichtiges Einsatzgebiet ist deren Verwendung als Retentionsmittel bei der Papierherstellung. Es wurde bereits vorgeschlagen kationische Acrylamidcopolymerisate mit unterschiedlichem Gehalt an kationischen Comonomeren (z.B. in der CA-PSen 1 110 019 und 1 133 788, in der japanischen Kokai 57-128 293 und in der US-PS 4 037 040) herzustellen und als Flockungsmittel, z.B. auch als Retentionsmittel für die Papierherstellung (wie in der CA-PS 1 133 788 oder in der japanischen Kokai 57-128 293), einzusetzen; bei den dort beschriebenen kationischen Acrylamidcopolymeren ist festzustellen, dass bei abnehmendem Mol-anteil kationischer Comomeren im Copolymerisat auch die Wirkung als Retentionsmittel für Papier abnimmt.

Es wurde nun gefunden, dass bei der Kombination einer bestimmten Wahl kationischer Copolymeren mit einem bestimmten sehr niedrigen Anteil der kationischen Comomeren mit bestimmten Tensiden und bestimmten Oelen überraschend gute Retentionsmittel - insbesondere als W/O-Emulsionen - für die Papierherstellung erhalten werden können, bei denen die Retentionswirkung in diesem niedrigen Kationizitätsbereich unerwarteterweise sogar wieder zunimmt.

Die Erfindung betrifft solche ölhaltigen Präparate, deren Herstellung, deren Verdünnung mit Wasser und deren Verwendung und die durch Einsatz der Präparate erhaltenen Produkte.

Ein erster Gegenstand der Erfindung sind also mit Wasser verdünnbare, öl-, polymerisat- und tensidhaltige Präparate, die dadurch gekennzeichnet sind, dass sie als Polymerisat (a) ein kationisches Copolymerisat aus

($a_1$) Acryl- und/oder Methacrylamid
und ($a_2$) einem Monomeren der Formel

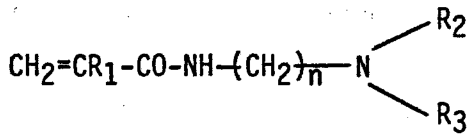

(I)

worin $R_1$ Wasserstoff oder Methyl,
$R_2$ Methyl oder Aethyl,
$R_3$ Methyl oder Aethyl
und n 2 oder 3
bedeuten,

enthalten, wobei der molare Anteil von ($a_1$) im Copolymerisat 91 bis 99,8 Mol% ausmacht und der molare Anteil ($a_2$) im Copolymerisat die restlichen 9 bis 0,2 Mol% ausmacht,

als Tensid (b) ein anionaktives Tensid enthalten, wobei der molare Anteil an anionaktivem Tensid (b) nicht grösser ist als der molare Anteil an kationischen Monomereinheiten vom Copolymerisat (a) und ein Teil der kationischen Monomereinheiten des Copolymerisates mit dem anionaktiven Tensid zur Salzbildung vereint sein kann

und als Oel (c) ein mit Wasser nicht-mischbares Oel enthalten, in dem das Polymerisat nicht löslich ist, aber fein verteilt ist.

Die hydrophilen Copolymerisate (a) sind kationisch, d.h. sie sind frei von anionischen Monomerkomponenten, bzw. sie sind durch Polymerisation von ausschliesslich den kationischen Monomeren ($a_2$) und den nicht-ionogenen Monomeren ($a_1$) erhältlich.

Die Monomeren der Formel (I) können auch in protonierter Form vorliegen und entsprechen dann der Formel

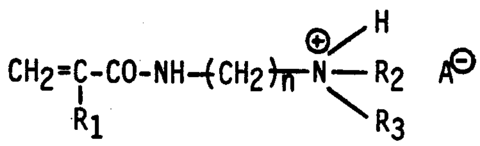

(II)

worin $A^{\ominus}$ ein Gegenion zur Ammoniumgruppe ist.

$R_1$ steht vorzugsweise für Methyl.
$R_2$ steht vorzugsweise für Methyl.
$R_3$ steht vorzugsweise für Methyl.
Der Index n steht vorzugsweise für 3.

Das Symbol $A^{\ominus}$ steht im allgemeinen für ein beliebiges Anion, wie es bei Ammoniumverbindungen üblich ist, vorteilhaft für ein Halogenidion (insbesondere Chlorid) oder Sulfatanion. In einer besonderen Ausführungsform der Erfindung steht $A^{\ominus}$ aber auch für $(A_1)^{\ominus}$, d.h. für das Anion des anionaktiven, vorteilhaft lipophilen, vorzugsweise öllöslichen Tensids (b) wie weiter unten definiert.

Der Anteil an kationischen Monomereinheiten in den erfindungsgemäss einzusetzenden Copolymerisaten beträgt vorteilhaft 1 bis 8 Mol%, vorzugsweise 2 bis 6 Mol% des gesamten Copolymerisates.

Das durchschnittliche Molekulargewicht (Gewichtsdurchschnitt) der erfindungsgemäss einzusetzenden Copolymerisate kann beliebig hoch sein, vorteilhaft bis zu 20'000'000; vorteilhaft haben sie ein durchschnittliches Molekulargewicht ≥ 500'000, vorzugsweise ≥ 1'000'000. Bevorzugt liegt das durchschnittliche Molekulargewicht im Bereich von 1'000'000 bis 20'000'000.

Als Komponente (b), d.h. als anionaktive Tenside, kommen im allgemeinen beliebige, übliche Tenside in Betracht, die mindestens einen lipophilen Kohlenwasserstoffrest und mindestens eine hydrophile anionische Gruppe enthalten, wie sie z.B. in "Surfactant Science Series" (M. Dekker Inc., New York and Basel), vol. 7: "Anionic Surfactants" (edited by Warner M. Linfield, 1976) - parts 1 and 2 -, beschrieben sind; der lipophile Rest ist vorzugsweise araliphatisch oder aliphatisch und enthält vorteilhaft mindestens 9 Kohlenstoffatome, vorzugsweise 12-36 Kohlenstoffatome; die anionische Gruppe kann eine beliebige, übliche Säuregruppe sein, die gegebenenfalls in Salzform vorliegt, vornehmlich Carboxylat, Phosphat, Phosphonat, Sulfat und Sulfonat, wovon Carboxylat, Phosphat, Sulfat und Sulfonat bevorzugt sind, vor allem aber die Sulfonatgruppe; gegebenenfalls können im Molekül des anionischen Tensids auch Polyalkylenglykoläthergruppen vorhanden sein, vorzugsweise enthalten die Tenside aber keine Polyalkylenglykoläthergruppen. Einzelne, erwähnenswerte Klassen von anionaktiven Tensiden sind die folgenden:

- sulfatierte Fettsäuremono-, -di- und -triglyceride (insbesondere sulfatierte, natürliche Fette oder Oele und sulfatierte Monoglyceride), sulfatierte Fettalkohole und sulfatierte Fettsäurealkanolamide;

- sulfonierte Kohlenwasserstoffe, vornehmlich Alkylsulfonate, Olefinsulfonate und Alkylarylsulfonate, insbesondere Petroleumsulfonate; sulfonierte aliphatische Carbonsäuren und Carbonsäureester, insbesondere $\alpha$-Sulfomonocarbonsäuren, $\alpha$-Sulfomonocarbonsäureester und Sulfobernsteinsäurealkylester;

- Phosphorsäurealkylpartialester;

- aliphatische Carbonsäuren (Seifen) und Carboxymethylierungsprodukte von Fettalkoholen, Monoglyceriden und Fettsäurealkanolamiden.

Unter den erwähnten anionischen Tensiden sind die Sulfonate, besonders die sulfonierten Kohlenwasserstoffe, bevorzugt, vor allem Petroleumsulfonate.

Die anionaktiven Tenside (b) liegen vorteilhaft mindestens z.T. in Form von Salz vor, wobei zur Salzbildung beliebige, übliche Kationen in Betracht kommen, z.B. Alkalimetallkationen (Lithium, Natrium, Kalium), Ammoniumkationen [sowohl unsubstituiertes Ammonium als auch substituiertes Ammonium, z.B. Mono-, Di- und Tri-($C_{1-8}$-alkyl)-ammonium und Mono-, Di- und Tri-($C_{2-3}$-alkanol)-ammonium, insbesondere Mono-, Di- und Triäthylammonium, Mono-, Di- und Triisopropanolammonium und Mono-, Di- und Triäthanolammonium], Erd-

alkalimetallkationen (Magnesium, Calcium, Strontium und Barium) und weitere mehrwertige Kationen, insbesondere $Zn^{2+}$, $Al^{3+}$ und $Zr^{4+}$. Bevorzugt liegen die anionaktiven Tenside in Form der entsprechenden Salze von mehrwertigen anorganischen Kationen vor, wovon Calcium besonders bevorzugt ist.

Die anionaktiven Tenside können eine mehr oder weniger ausgeprägte Wasserlöslichkeit bzw. -dispergierbarkeit haben oder können in Wasser praktisch unlöslich sein, (d.h. sie geben in den verwendeten Konzentrationen keine echte Lösung in Wasser, können aber noch in Wasser dispergierbar sein und/ oder vorzugsweise in Oel dispergierbar oder löslich sein), was im wesentlichen von der Wahl des lipophilen Restes und von der Wahl des Kations abhängt. Bevorzugte anionaktive Tenside sind die lipophilen, vorzugsweise solche die in Form des Na-Salzes öllöslich sind, insbesondere solche, die in Form von Salzen solcher Kationen (vorzugsweise mehrwertiger anorganischer Kationen) vorliegen, dass sie in den verwendeten Konzentrationen in Wasser keine echten Lösungen geben und mit Wasser und mit entsprechenden Oelen, insbesondere wie unter (c) definiert, W/O-Emulsionen geben, d.h. sie haben W/O-Emulgator-Charakter, bzw. sind W/O-Emulgatoren.

Die obenerwähnten anionaktiven Tenside sind im allgemeinen bekannt oder auf an sich bekannte Weise herstellbar. Die Aminsalze und die Salze mehrwertiger anorganischer Kationen der anionaktiven Tenside werden vorteilhaft in situ hergestellt, indem man günstigerweise die Alkalimetallsalze dieser Tenside mit wasserlöslichen Salzen der entsprechenden Amine, bzw. der mehrwertigen anorganischen Kationen umsetzt. Als wasserlösliche Salze kommen im wesentlichen Salze starker anorganischer Säuren (je nach Kation vorteilhaft Schwefelsäure, Salzsäure, Salpetersäure und Phosphorsäure) und einfacher organischer Carbonsäuren ($C_{1-4}$-Carbonsäuren, vornehmlich Ameisensäure und Essigsäure) in Betracht, wobei unter den Aminsalzen die Sulfate, Phosphate, Chloride und Acetate bevorzugt sind und unter den Salzen der mehrwertigen anorganischen Kationen die Formiate und vor allem die Chloride bevorzugt sind. Besonders bevorzugt wird Calciumchlorid eingesetzt.

Im allgemeinen enthalten die Copolymerisate in den erfindungsgemässen Präparaten die den Monomeren ($a_2$) entsprechenden kationischen Monomereinheiten

und die den Monomeren ($a_1$) entsprechenden nicht-ionogenen Monomereinheiten, wobei ein Teil der kationischen Monomereinheiten, insbesondere das Anion des anionaktiven Tensids als Gegenion zum Kation enthält. Schematisch können die Polymerisate als solche, die die folgenden wiederkehrenden Monomereinheiten enthalten, dargestellt werden:

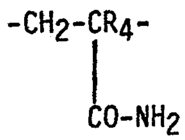

($\alpha$),

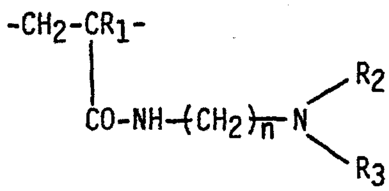

($\beta_1$),

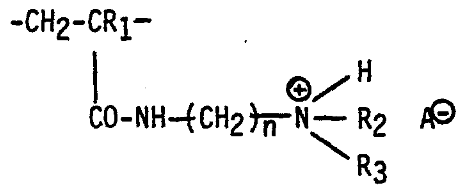

($\beta_2$),

worin $A^{\ominus}$ ein wie oben definiertes Anion ist und $R_4$ Methyl oder vorzugsweise Wasserstoff bedeutet.

Bei wässrigen Präparaten mit sauren pH-Werten bzw. in Gegenwart der anionaktiven Tenside liegen die kationischen Monomereinheiten vorzugsweise als ($\beta_2$) vor, worin ein Teil von $A^{\ominus}$ das Anion $(A_1)^{\ominus}$ des anionaktiven Tensids ist.

Vorteilhaft ist das anionaktive Tensid

($b_1$) ein lipophiles, vorzugsweise öllösliches, anionaktives Tensid,

insbesondere ein öllösliches Kohlenwasserstoffsulfonat.

Die Komponente (c) kann sowohl ein einheitliches Oel als auch ein Gemisch von verschiedenen Oelen sein. Im allgemeinen eignen sich beliebige Oele, wie sie zur Herstellung von wasserlöslichen Polymerisaten enthaltenden Emulsionen und/oder Dispersionen verwendet werden, und zwar sowohl natürliche als auch synthetische Oele. Als natürliche Oele kommen sowohl Oele aus der Verarbeitung von Erdöl als auch vegetabile und tierische Oele (im wesentlichen Triglyceride) in Betracht; als synthetische Oele kommen sowohl synthetische Kohlenwasserstoffe als auch modifizierte Paraffine (Kohlenwasserstoffe) und Fettsäureester (vornehmlich Triglyceride und Monoester) in Betracht.

Einzelne, bevorzugte Kategorien von Oelen sind die folgenden:

1. <u>Kohlenwasserstoffe</u>

1.1 Kohlenwasserstoffe aus der Erdölverarbeitung, vornehmlich

1.1.1 Spezialbenzine, die aus dem Rohbenzin herausdestilliert werden (Siedebereich 65-140°C) (desaromatisierte, sowie aromatenhaltige Typen)

1.1.2 White Spirits, Testbenzine und Lackbenzine, (Siedebereich 100-310°C,- vorzugsweise 140-300°C), insbesondere:

| | | |
|---|---|---|
| . aromatenfreie Typen | Siedebereich | 100-270°C vorzugsweise 140-250°C |
| . Fraktionen mit einem Aromatengehalt zwischen 12 und 19% | " | 160-210°C |
| . Fraktionen mit einem Aromatengehalt zwischen 24 und 45% | " | 140-310°C |
| . Fraktionen mit einem Aromatengehalt von 80-90% | " | 160-260°C |
| . rein aromatische white spirits | " | 160-310°C |

1.1.3 Aromatenfreie Kohlenwasserstoffe mit isoparaffinischer Struktur (Siedebereich 110-260°C)

1.1.4 Paraffinöle (= Mineralöle) z.B. Dieselöle, Spindelöle, Maschinenöle, Zylinderöle, Schmieröle und Vaselinöle

1.1.5 Petrolatum (Petrolate)

1.2 Synthese Kohlenwasserstoffe, vornehmlich solche aus der Fischer-Tropsch-Synthese oder der Hochdruckkohlehydrierung, insbesondere:

| | | |
|---|---|---|
| - synthetische Benzine | Siedebereich | 65-170°C |
| - Kogasin I | " | 190-230°C |
| - Kogasin II | " | 230-330°C |
| - synthetisches Paraffinöl | " | 300-450°C |

1.3 Gegebenenfalls alkylsubstituierte Benzole, Benzol, Xylol, Toluol, Methyläthyl- und Trimethylbenzole, Dimethyläthyl- und Tetramethylbenzole, sowie höhere Alkylbenzole ($C_6$-$C_{12}$Alkylbenzole).

2. Natürliche vegetabile oder tierische Triglyceride, insbesondere Olivenöl, Erdnussöl, Cottonöl, Kokosfett, Rüböl, Sonnenblumenöl, Maiskeimöl, Rizinusöl und Klauenöl.

3. Fettsäure-monoester, vornehmlich $C_{1-4}$-Alkylester von $C_{12-24}$-, vorzugsweise $C_{14-24}$-Fettsäuren, insbesondere: Methyl-, Butyl- und Isopropylester von Stearinsäure, Oelsäure, Palmitinsäure und Myristinsäure und deren Mischungen.

Die Petrolate werden vorteilhaft im Gemisch mit Oelen verwendet, die bei Raumtemperatur (20°C) flüssig sind.

Unter den erwähnten Oelen sind die weitgehend aromatenfreien Kohlenwasserstoffe und die aliphatischen Fettsäureester bevorzugt, insbesondere die Kohlenwasserstoffe, worunter diejenigen gemäss Abschnitten 1.1.2, 1.1.3 und 1.1.4, und vor allem aromatenfreie und aromatenarme white spirits, isoparaffinische Oele (1.1.3) und Mineralöle (1.1.4) bevorzugt sind.

Gegebenenfalls ist (c) ein Gemisch von mindestens zwei Oelen, insbesondere ein Gemisch aus einem Oel ($c_1$) und einem Oel ($c_2$), die so gewählt werden, dass der O/W-EHLB-Wert des Oeles ($c_1$) grösser ist als der O/W-EHLB-Wert des Gemisches der Oele ($c_1$) + ($c_2$). O/W-EHLB-Wert bedeutet den optimalen HLB-Wert eines hypothetischen Tensids der für dieses Oel oder Oelgemisch erforderlich ist, damit eine stabile Oel-in-Wasser-Emulsion entstehen kann; siehe z.B. "Cosmetics, Science and Technology", Verlag John Wiley and Sons (2nd edition, vol. 3, 1974), Seiten 602-607, oder Philip Sherman "Emulsion Science", Academic Press, London and New York, 1968, Seiten 146-147, oder noch Paul Becher "Emulsion, Theory and Practice", 2nd edition, 1965, American Chemical Society, Monograph Series no. 162.

Vorzugsweise ist der O/W-EHLB-Wert des Oeles ($c_2$) kleiner als derjenige des Oeles ($c_1$).

Bevorzugte Oele ($c_1$) haben einen O/W-EHLB-Wert im Bereich von 10 bis 15; solche Oele sind unter den oben aufgezählten insbesondere diejenige, die unter den Abschnitten 1.1.1, 1.1.2, 1.1.3 und 1.3 erwähnt sind. Bevorzugte Oele ($c_2$) haben einen O/W-EHLB-Wert von 7 bis 10; solche Oele sind, unter den oben aufgezählten, insbesondere diejenige, die unter den Abschnitten 1.1.4, 1.1.5, 2 und 3 erwähnt sind.

Vorteilhaft enthalten die erfindungsgemässen Präparate auch

(d) ein lipophiles, vorzugsweise öllösliches, nicht-ionogenes Tensid.

Diese Komponente (d) kann ein einheitliches Tensid oder auch ein Gemisch von lipophilen bzw. öllöslichen, nicht-ionogenen Tensiden sein. Zweckmässig ist die Komponente (d) ein W/O (Wasser-in-Oel)-Emulgator, d.h. ein Tensid das mit mindestens einem Teil der Oele (c) in Gegenwart von Wasser fähig ist, eine W/O-Emulsion zu erzeugen.

Die nicht-ionogenen Tenside (d) sind vorteilhaft wasserunlöslich oder in Wasser nur dispergierbar und weisen als W/O-Emulgatoren vorteilhaft einen HLB-Wert $\leq$ 8, vorzugsweise zwischen 3 und 8 auf; besonders bevorzugt liegt der HLB-Wert zwischen 4 und 7.

Ist (d) ein Gemisch von nicht-ionogenen lipophilen Tensiden, so können die einzelnen Komponenten dieses Gemisches (d) auch unterschiedliche HLB-Werte haben, werden dann aber vorzugsweise in solchen relativen Mengen eingesetzt, dass der durchschnittliche HLB-Wert dieses Tensidgemisches vorteilhaft $\leq$ 8 ist und vorzugsweise zwischen 3 und 8, insbesondere zwischen 4 und 7 liegt.

Als Komponente (d), d.h. als lipophile, vorzugsweise öllösliche, nicht-ionogene Tenside kommen im allgemeinen übliche Verbindungen in Betracht, im wesentlichen solche, die mindestens einen lipophilen Kohlenwasserstoffrest,

vorteilhaft mit mindestens 9, vorzugsweise 9-24 Kohlenstoffatomen und mindestens einen nicht-ionogenen hydrophilen Rest enthalten, welcher vorteilhaft ein gegebenenfalls Propylenglykoleinheiten enthaltender Mono- oder Polyäthylenglykolrest und/oder der Rest eines höheren Polyols (z.B. Glycerin, Mannit, Pentaerithrit oder Sorbit) ist; diese lipophilen bzw. öllöslichen Tenside können auch als hydrophobe Tenside bezeichnet werden und unter den hydrophoben Tensiden können auch die hydrophoben Pluronictypen und Tetronics genannt werden, in denen der hohe Anteil Polypropylenglykol als lipophiler Rest bezeichnet werden kann. Im einzelnen können folgende Kategorien von nicht-ionogenen Tensiden genannt werden:

- Mono- oder Polyoxäthylierungs- und/oder Oxypropylierungsprodukte von gesättigten und/oder ungesättigten, linearen und/oder verzweigten aliphatischen Alkoholen, von Alkylphenolen, von Fettsäuren, von Fettsäurealkanolamiden, von Fettsäurepolyolpartialestern und von vegetabilen oder tierischen Fetten oder Oelen; bzw. entsprechende Verätherungs- und/oder Veresterungsprodukte von Mono- und/oder Polyäthylen- und/oder -propylenglykolen.

- Fettsäurepolyolpartialester;

- Nicht-ionogene Aethylenoxid/Propylenoxidcopolymerisate mit einem hohen Anteil an Propylenoxyeinheiten (Pluronic Typen) und Aethylenoxid/Propylenoxidadditionsprodukte an Aethylendiamin, mit einem hohen Anteil an Propylenoxyeinheiten (Tetronic Typen), die wegen des hohen Anteils an Propylenoxyeinheiten als nicht-ionogene Tenside gelten.

Die erwähnten Polyolpartialester sind vorteilhaft Di- oder vorzugsweise Monoester von aliphatischen Polyolen mit 3 oder mehr Hydroxygruppen, vornehmlich von Glycerin, Pentaerithrit, Mannit oder Sorbit.

Bevorzugte, nicht-ionogene Tenside sind im allgemeinen Mono- und/oder Polyoxäthylierungsprodukte von aliphatischen Alkoholen, von Alkylphenolen und von aliphatischen Fettsäuren, Polyolpartialester von aliphatischen Fettsäuren, Mono- und/oder Diäther von Mono- und/oder Polyäthylenglykolen mit aliphatischen Alkoholen und/oder Alkylphenolen sowie Mono- und/oder Diester von Mono- und/oder Polyäthylenglykolen mit aliphatischen Fettsäuren.

Die vorkommenden Fettsäurereste können im allgemeinen Acylreste üblicher Alkylcarbonsäuren oder Alkenylcarbonsäuren sein, wobei als Alkenylcarbonsäuren vorteilhaft monoäthylenisch ungesättigte Säuren in Betracht kommen. Die Alkylreste als alleinige lipophile Reste [(wie z.B. in der untenstehenden Formel (III)] enthalten vorteilhaft mindestens 9 Kohlenstoffatome, vorzugsweise 9-24 Kohlenstoffatome, insbesondere 9-18 Kohlenstoffatome und können linear oder verzweigt sein. In den Alkylarylresten, wie z.B. im Rest der untenstehenden Formel (γ), enthalten die Alkylreste vorteilhaft 4-12 Kohlenstoffatome und können ebenfalls linear oder verzweigt sein. Ist der lipophile Rest der Acylrest einer Carbonsäure, dann handelt es sich vorteilhaft um den Rest einer Fettsäure, im wesentlichen um eine Alkyl- oder Alkenylcarbonsäure, die vorteilhaft 9-24, vorzugsweise 12-20 Kohlenstoffatome enthält, wobei Laurinsäure, Myristinsäure, Stearinsäure und Oelsäure besonders bevorzugt sind. Bei den Polyäthylenglykolderivaten, insbesondereauch der untenstehenden Formeln, handelt es sich im allgemeinen um durchschnittliche Formeln, d.h. solche worin die angegebene Zahl Aethylenoxyeinheiten eine durchschnittliche Zahl ist. Auch bei den lipophilen Kohlenwasserstoffresten können Gemische z.B. Teilgemische vorkommen und in solch einem Fall stellt die angegebene Zahl Kohlenstoffatome eine durchschnittliche Zahl dar.

Unter den erwähnten nicht-ionogenen Tensiden sind insbesondere diejenigen der folgenden Formeln bevorzugt:

$$R_5-(O-CH_2-CH_2)_p-OH \qquad (III)$$

und

$$(R_6-CO)_q-X \qquad (IV),$$

worin $R_5$ $C_{9-24}$-Alkyl oder -Alkenyl oder einen Rest der Formel

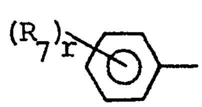

(γ),

$R_6$-CO- je den Acylrest einer Alkyl- oder Alkenylcarbonsäure mit 12-20 Kohlenstoffatomen,

$R_7$ $C_{4-12}$-Alkyl,

X den q-wertigen Rest von Glycerin oder Sorbit oder eines Mono- oder Polyäthylenglykols der Formel

$$HO-(CH_2-CH_2-O)_s-H \quad (V),$$

p 1 bis 6,

q 1 oder 2, oder bei Sorbit auch 3,

r 1 oder 2

und s 1 bis 10

bedeuten, wobei Zahl und Länge der lipophilen Reste und Zahl der $-CH_2-CH_2-O$-Gruppen zweckmässig so gewählt werden, dass der HLB-Wert des nicht-ionogenen Emulgators oder Emulgatorgemisches zwischen 3 und 8, vorzugsweise zwischen 4 und 7 liegt.

Darunter sind vor allem diejenigen der folgenden Formeln bevorzugt

$$R_8-(O-CH_2-CH_2)_t-OH \quad (VI),$$

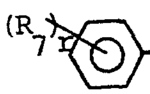$-(O-CH_2-CH_2)_k-OH$ (VII),

$$R_9-CO-Y \quad (VIII)$$

und

$$R_9-CO-O-(CH_2-CH_2-O)_m-CO-R_9 \quad (IX),$$

worin $R_8$ $C_{9-18}$-Alkyl oder -Alkenyl,

$R_9$-CO- den Acylrest einer aliphatischen $C_{12-18}$-Fettsäure,

Y- den einwertigen Rest von Sorbit, Glycerin oder Di- bis Tetraäthylenglykol,

t 2 bis 3,
k 3 bis 5
und m 4 bis 9

bedeuten.

Der HLB-Wert der nicht-ionogenen Tenside kann durch eine einfache bekannte- Formel, bei Kenntnis des lipophilen Restes des hydrophilen Restes und der Zahl Aethylenoxy- bzw. Propylenoxyeinheiten, berechnet werden. Beträgt der berechnete Wert für ein nicht-ionogenes Tensid 2,5 oder weniger, dann wird es hier nicht mehr als W/O-Emulgator betrachtet.

Ist (c) ein Gemisch von Oelen ($c_1$) und ($c_2$), dann werden die Tenside (d) und die Oele günstigerweise so gewählt, dass der O/W-EHLB des Gemisches ($c_1$) + ($c_2$) möglichst nahe zum HLB-Wert von (d) liegt aber vorteilhaft nicht kleiner als dieser ist.

Vorteilhaft enthalten die erfindungsgemässen Präparate auch
(e) Wasser.

Die Copolymerisate (a) bzw. die Salze davon, die das Anion des anionaktiven Tensides als Gegenion enthalten sind hydrophil, d.h. sie können Wasser aufnehmen oder in Gegenwart von Wasser ein Gel oder Sol bilden bzw. sind in Wasser mindestens kolloidal löslich; die relative Menge Wasser, die mit dem Oel (c) und mit dem Emulgator (d) verwendet wird ist im allgemeinen so gewählt, dass das Polymerisat zusammen mit dem Wasser im Oel fein dispergiert ist (sei es als Suspension des Polymerisates mit aufgenommenem Wasser oder des wassergequollenen Polymerisates oder noch des wässrigen Polymergels im Oel, sei es als Emulsion des wässrigen Polymersols bzw. der wässrigen Polymerlösung im Oel).

Gegebenenfalls können die erfindungsgemässen Präparate zusätzlich
(f) ein mit Oel mischbares, in Wasser schwerlösliches und nicht selbstdispergierbares, polares Lösungsmittel, das alleine keine Emulgatoreigenschaften aufweist, aber die Grenzflächenspannung Wasser/Oel erniedrigt,
enthalten.

Bei diesen Lösungsmitteln handelt es sich im allgemeinen um polare Verbindungen, die einen extrem niedrigen HLB-Wert aufweisen, aber noch genügend polar sind, um sich an die Grenzfläche Oel/Wasser anzulagern; vorteilhaft handelt es sich dabei um in Wasser schwerlösliche, aliphatische Alkohole oder Phosphorsäuretriester oder Pluronics. Die Alkohole enthalten vorteilhaft 5-10 Kohlenstoffatome pro Hydroxygruppe und es können insbesondere die folgenden erwähnt werden: Methyl-isobutylcarbinol, 2-Aethylhexanol, Isononanol, Isodecanol und 2,4,7,9-Tetramethyl-5-decyn-4,7-diol. Unter den Phosphorsäuretriestern können insbesondere Tributylphosphat, Triisobutylphosphat und Tri-(butoxyäthyl)phosphat erwähnt werden. Unter den Pluronics kann insbesondere das Pluronic L101 erwähnt werden.

Die Begriffe "löslich", "dispergierbar" und "unlöslich" verstehen sich selbstverständlich bei solchen Bedingungen (insbesondere Konzentrationen bzw. Konzentrationsbereichen und Temperaturen bzw. Temperaturbereichen), wie sie hier verwendet werden.

Ein weiterer Gegenstand der Erfindung ist das Verfahren zur Herstellung der erfindungsgemässen Präparate, das dadurch gekennzeichnet ist, dass man das Copolymere (a) vor, während und/oder nach der Copolymerisation, mit dem Tensid (b) und dem Oel (c) kombiniert, wobei das Copolymerisat bzw. die entsprechenden Monomeren vorzugsweise in möglichst fein verteilter Form vorliegen.

Wenn die Copolymerisation in W/O-Emulsion stattfindet ist es von Vorteil, dass mindestens ein Teil der Tenside, insbesondere der anionaktiven Tenside, noch vor der Copolymerisation und/oder vor Zugabe des kationischen Monomeren zugegeben wird.

Ein besonderer Gegenstand der Erfindung ist das Verfahren zur Herstellung von erfindungsgemässen Präparaten, das dadurch gekennzeichnet ist, dass man die zur Bildung der Copolymerisate (a) erforderlichen Monomeren in Gegenwart der anionaktiven Tenside (b) in W/O-Emulsion polymerisiert und gewünschtenfalls Wasser und/oder Oel abdestilliert und gegebenenfalls weitere

Zusätze (a), (b), (c), (d), (e) und/oder (f), und/oder weitere Tenside zugibt.

Die vinylartigen Monomeren werden vorteilhaft in Form von wässriger Lösung, günstigerweise in Gegenwart der anionaktiven Tenside und vorzugsweise auch in Gegenwart der nicht-ionogenen, öllöslichen Tenside (d) in mindestens einem Teil des Oels (c) emulgiert, wobei die kationischen Monomeren in einem molaren Ueberschuss gegenüber den anionaktiven Tensiden vorliegen; die in Oel emulgierte wässrige Phase enthält gegebenenfalls weitere Zusätze, wie z.B. übliche Komplexbildner, Salze und Säuren und/oder Basen zur pH-Einstellung. In einer bevorzugten Verfahrensvariante werden die zu polymerisierenden, vinylartigen Monomeren in die vorgelegte W/O-Emulsion, die bereits anionaktives Tensid und gegebenenfalls nicht-ionogenes Tensid und/oder weitere übliche Zusätze enthält, gegeben, oder es werden die zu polymerisierenden, vinylartigen Monomeren in die wässrige Dispersion (Suspension und/oder Emulsion) oder Lösung des anionaktiven Tensids gegeben, wonach Oel und gegebenenfalls nichtionogenes Tensid und/oder weitere übliche Zusätze zugegeben werden können, oder noch werden die zu polymerisierenden Monomeren in Wasser gelöst und zu dieser wässrigen Monomerlösung werden die im Oel (c) gelösten Tenside (b) und (d) gegeben; die wässrige und/oder die ölige Phase können dabei weitere übliche Zusätze enthalten, wie Komplexbildner, Salze und Säuren und/oder Basen zur pH-Einstellung; dadurch können Dispersionen der wässrigen Monomerphase in Oel erzeugt werden. Durch die Anwesenheit der anionaktiven Tenside in der monomerhaltigen W/O-Emulsion kann ein Teil der kationischen Monomeren, besonders unter neutralen bis sauren Bedingungen, in Form von weniger wasserlöslichen, lipophilen Tensidsalzen vorliegen, worin das Anion des anionaktiven Tensids als Gegenion zum kationischen Monomeren fungiert. Nach Zugabe des Initiators kann die Emulsionspolymerisation auf an sich übliche Weise erfolgen.

Eine besondere Ausführungsform des Herstellungsverfahrens für die erfindungsgemässen polymerisathaltigen Präparate besteht darin, dass man eine ölige Dispersion, die ein hydrophiles, kationisches Copolymerisat (a), Wasser (e) und ein lipophiles bzw. öllösliches, nicht-ionogenes Tensid (d)

aber kein anionaktives Tensid enthält, herstellt und diese vorzugsweise mit einem lipophilen, vorzugsweise öllöslichen, praktisch wasserunlöslichen, anionaktiven Tensid ($b_2$) versetzt, wobei ($b_2$) ein sulfonierter Kohlenwasserstoff, gegebenenfalls in Salzform, ist und das Oel der öligen Dispersion ein Oel ($c_3$) ist, d.h. ein mit Wasser nicht mischbares Kohlenwasserstofföl, in dem das Copolymerisat (a) nicht löslich ist, aber darin mit dem Wasser fein verteilt ist. Als Kohlenwasserstofföle ($c_3$) kommen im allgemeinen solche in Betracht, wie im Unterabschnitt 1.1 beschrieben, wovon diejenigen gemäss entsprechenden Unterabschnitten 1.1.1 bis 1.1.4, insbesondere 1.1.3, 1.1.4 und vor allem white spirits bevorzugt sind.

Die öligen Dispersionen die (a) neben (e), ($c_3$) und (d) aber kein (b) enthalten, werden vorteilhaft durch Emulsionspolymerisation entsprechender wässriger Monomerlösungen im Oel und in Gegenwart des Emulgators (d) und gegebenenfalls teilweisem Abdestillieren von Wasser hergestellt und können dann mit (b) bzw. ($b_2$) und gegebenenfalls mit hydrophilen Emulgatoren versetzt werden.

Die Copolymerisation kann auf an sich bekannte Weise durchgeführt werden (siehe z.B. "High Polymers", vol. 9, 1955 "Emulsion Polymerisation", Verlag: Interscience Publishers Inc., New York) und das wässrige System kann neben den jeweiligen erfindungsgemäss erforderlichen Bestandteilen, übliche Zusätze enthalten, wie z.B. Polymerisationsinitiatoren (vorzugsweise Verbindungen, die unter thermischer Zersetzung freie Radikale bilden oder ein Redoxsystem), Komplexbildner (z.B. Aethylendiamintetraessigsäure-dinatriumsalz), Säuren und/oder Basen zur pH-Einstellung und/oder Metallsalze, z.B. $Na^+$- und/oder $Ca^{2+}$-Salze. Nach Inertisieren (d.h. nach Verdrängen des Sauerstoffes mittels Inertgas) und nach Zugabe geeigneter Polymerisationsinitiatoren findet die Polymerisation statt. Nach erfolgter Emulsionspolymerisation, bzw. insbesondere nach Zusammenbringen von anionaktiven Tensiden und kationischen Copolymeren, können, besonders nach dem Verdünnen mit Wasser, auch im Copolymerisat kationische Gruppen in entsprechender Salzform vorliegen. Die Copolymerisation ist normalerweise exotherm und erfolgt vorteilhaft unter sauren Bedingungen, z.B. bei pH-Werten zwischen 2 und 6,

vorzugsweise bei pH-Werten zwischen 2,5 und 4. Der Wassergehalt der W/O-Emulsion während der Polymerisation beträgt vorteilhaft 15-80 Gew%, vorzugsweise 30-75 Gew% (bezogen auf die gesamte Emulsion). Die Polymerisation kann adiabatisch oder auch isotherm durchgeführt werden, vorzugsweise wird sie aber teilweise adiabatisch durchgeführt, d.h. die Temperatur wird durch dosierte Zugabe des Initiators und/oder durch Kühlung des Reaktionsgemisches begrenzt ansteigen lassen, vorteilhaft auf Werte ≤ 120°C, gegebenenfalls unter Druck; vorzugsweise wird zwischen 30 und 110°C verfahren. Enthält das zu polymerisierende Gemisch hydrolysierbare Monomeren (insbesondere Ester oder primäre Amide), dann werden zweckmässig solche Reaktionsbedingungen gewählt, dass eine Hydrolyse zu den unerwünschten Säuren weitmöglichst vermieden wird.

Mit den erfindungsgemäss einzusetzenden Tensiden können auch mit relativ wenig Tensid sehr feinteilige Dispersionen erzielt werden. Durch die Emulsionspolymerisation können sehr hohe Molekulargewichte der Copolymerisate erreicht werden, so dass ein sehr breites Spektrum an Molekulargewichten der Copolymerisate zur Verfügung stehen kann, was auch eine sehr breite Einsetzbarkeit der erfindungsgemässen Präparate erlaubt.

Die Emulsionspolymerisation erfolgt zweckmässig in Gegenwart von mindestens einem Teil der Oele (c). Für die Emulsionspolymerisation verwendet man vorteilhaft Oele, in denen mindestens ein Teil, vorzugsweise mindestens 50 Gew%, besonders bevorzugt mindestens 80 Gew% Kohlenwasserstoffe sind, wobei die möglichst weitgehend aliphatischen Kohlenwasserstoffe bevorzugt werden. Die relativen Mengen Wasser und Oel, sowie die Konzentration der wässrigen Monomerlösung können weit variieren, wobei besonders gute Copolymerisate bei relativ verdünnten Monomerlösungen und -emulsionen erhalten werden; die Konzentration der gesamten Monomeren in der W/O-Emulsion beträgt vorteilhaft 5 bis 35%, vorzugsweise 10 bis 30%; das Gewichtsverhältnis vom Wasser zum Oel wird vorzugsweise möglichst hoch gehalten, wie es noch ausreicht, damit die Emulsion eine W/O-Emulsion bleibt, und beträgt vorteilhaft 1,5 bis 6, vorzugsweise 1,8 bis 4,8; die zu polymerisierende W/O-Emulsion enthält mindestens einen Teil der Tenside (b) [vorzugsweise ($b_1$)] und/oder (d) wie es ausreicht, um eine für die Polymerisation genügend stabile W/O-Emulsion zu erzeugen. Nach erfolgter Polymerisation kann die erhaltene copolymerhaltige W/O-Emulsion mit weiteren Zusätzen versetzt werden - z.B. mit weiteren Komponenten (a), (b), (c), (d) und/oder (e) und/oder mit der Komponente (f) - und/oder es kann der Gehalt an Komponenten (c) und/oder (e) z.B. durch Abdestillieren herabgesetzt werden; diese zusätzlichen Modifikationen der copolymerisathaltigen W/O-Emulsionen können die Eigenschaften der Präparate z.B. deren Stabilität und/oder deren Verdünnbarkeit mit Wasser beeinflussen, insbesondere verbessern.

Soll das Präparat noch die Komponente (f) enthalten, dann wird diese vorteilhaft als letzte, bzw. nach erfolgter Emulsionspolymerisation dem Präparat zugegeben; günstigerweise wird (f) in mit wenig Oel (c) vorverdünnter Form eingesetzt, gewünschtenfalls können aber auch grössere Mengen Oel (c) verwendet werden und/oder es können zusammen mit (f) bzw. mit dessen Lösung in Oel (c) noch weitere Zusätze (a), (b), (d) und/oder gegebenenfalls (e) dem Präparat zugegeben werden.

Soll das Präparat ein Gemisch von Oelen ($c_1$) und ($c_2$) enthalten, dann erfolgt die Emulsionspolymerisation vorteilhaft im Oel ($c_1$), das gegebenenfalls ($c_2$) enthält; das Oel ($c_2$) bzw. der ev. restliche Teil des Oels ($c_2$) kann erforderlichenfalls nach erfolgter Emulsionspolymerisation zugegeben werden, gegebenenfalls nach dem Abdestillieren vom Wasser, bzw. vom grössten Teil des Wassers.

Die mengenmässige Zusammensetzung der erfindungsgemässen und, wie oben beschrieben erhältlichen bevorzugten Präparate, kann günstigerweise wie folgt schematisiert werden: das Präparat enthält pro 100 Gewichtsteile der Komponente (a)

x Gewichtsteile der Komponente (b)
y Gewichtsteile der Komponente (c)
z Gewichtsteile der Komponente (d)
u Gewichtsteile der Komponente (e) und
v Gewichtsteile der Komponente (f).

Die Konzentrationen x und z entsprechen vorzugsweise mindestens denjenigen die erforderlich sind, damit die wässrige monomerhaltige Dispersion bei der Copolymerisation genügend stabil bleibt; x beträgt vorteilhaft mindestens 0,002 und günstigerweise höchstens 15, vorzugsweise 0,005 bis 10, wobei aber das kationische Monomere im molaren Ueberschuss gegenüber dem anionaktiven Tensid eingesetzt wird. Die oben angegebenen Mengenverhältnisse von (a) und (b) beziehen sich auf die jeweiligen Komponenten ohne eine entsprechende Salzbildung in den Zahlen 100 für (a) und x für (b) zu berücksichtigen, sollen aber die mögliche Salzbildung von (a) + (b) mitumfassen; z beträgt vorteilhaft 0-80, vorzugsweise 1-80, besonders bevorzugt 2-35. Die erfindungsgemässen Präparate sind vorteilhaft ölhaltig und y beträgt vorzugsweise 30-400, besonders bevorzugt 40-300. Der Gehalt an Wasser kann sehr stark schwanken und ist z.T. auch vom Gehalt an Oel, d.h. von y, abhängig, und zwar insoweit als die erfindungsgemässen Präparate in der noch nicht mit Wasser verdünnten, ölhaltigen Form, wenn sie Wasser enthalten, dieses vorwiegend in der diskontinuierlichen Phase enthalten, d.h. Oel ist die kontinuierliche Phase und die wasserhaltige Phase ist darin dispergiert bzw. emulgiert. Nach der (inversen) Emulsionspolymerisation kann das Wasser, vorteilhaft azeotropisch, abdestilliert werden, wobei theoretisch das ganze Wasser abdestilliert werden kann, d.h. bis zu u = 0, was aber praktisch nicht bevorzugt ist, da es schwierig ist, das das Copolymerisat quellende Restwasser total abzudestillieren; anderseits kann der copolymerisathaltigen W/O-Emulsion gegebenenfalls noch Wasser, z.B. auch in Form von einer weiteren W/O-Emulsion oder einer wässrigen Lösung eines Copolymerisates (a),zugegeben werden, so dass der Wassergehalt des Präparates auch relativ hoch sein kann; u beträgt vorteilhaft 0-600, vorzugsweise 1-600, besonders bevorzugt 2-500. Vom wirtschaftlichen Standpunkt aus ist es bevorzugt, nicht das ganze Wasser abzudestillieren und der Wassergehalt u beträgt vorteilhaft 5 bis 600, vorzugsweise 10 bis 500.

Um die Verteilbarkeit des Polymerisates in Wasser durch Verdünnen weiter zu erleichtern, kann es von Vorteil sein, dem Präparat die Komponente (f) zuzugeben, wobei (f) in möglichst kleinen Mengen eingesetzt wird, insbesondere in Mengen die kleiner sind als y die Komponente (f) ist in der Komponente (c) gelöst ; vorteilhaft beträgt v 0-30, vorzugsweise 0-15.

Die erfindungsgemässen Präparate weisen vorteilhaft die folgende Zusammensetzung auf: auf 100 Teile (a)

x = 0,002-15
y = 30-400
z = 1-80
u = 1-600
v = 0-30, (wobei $v < \frac{y}{3}$)

Eine besonders bevorzugte Zusammensetzung der erfindungsgemässen Präparate ist die folgende: auf 100 Teile (a)

x = x' = 0,005-10
y = y' = 40-300
z = z' = 2-35
u = u' = 2-500
v = v' = 0-15, und $v' < \frac{y'}{5}$

Die erfindungsgemässen ölhaltigen Präparate sind Dispersionen, die sehr unterschiedliche Viskostitäten aufweisen können und es können auch sehr dünnflüssige Präparate hergestellt werden; so kann die Viskosität (Brookfield-Rotationsviskosität, gemessen im LV-Viskosimeter) der Dispersionen z.B. zwischen 5 cp (Spindel Nr. 2) und 10'000 cp (Spindel Nr. 4), vorzugsweise zwischen 50 cp (Spindel Nr. 2) und 5'000 cp (Spindel Nr. 4) variieren; die erfindungsgemässen Dispersionen sind auch stabil, d.h. sie können längere Zeit ohne Veränderung gelagert werden, oder, wenn die Dispersionen sich in Schichten trennen, können sie durch einfaches Rühren in die ursprüngliche, regelmässig dispergierte Form gebracht werden. Besonders hervorzuheben ist die sehr gute Verteilbarkeit in Wasser bzw. Verdünnbarkeit mit Wasser der erfindungsgemässen Präparate, insbesondere der W/O-Emulsionen, und zwar können sie schon durch einfaches Zugeben der Präparate zu Wasser oder von Wasser zu den Präparaten unter Rühren sehr rasch verdünnt werden oder es können auch die üblichen Verdünnungsapparate, wie sie in der Technik üblich sind und in der Literatur auch zahlreich beschrieben sind, für eine Vorverdünnung mit Wasser verwendet werden. Besonders geeignet sind Verdünnungsapparate, die mit Wasserstrahlpumpen arbeiten, d.h. es werden die Copolymerdispersion durch eine Düse und das Wasser durch eine andere Düse so in eine "Kammer" gepumpt, dass das Wasser mit hoher Geschwindigkeit die Dispersion mitreisst, wonach das Gemisch auf verschiedene Weise, z.B. über Prallplatten oder -wände oder unter Ausnutzung hoher Scherkräfte oder durch Ein- und Auspumpen in "Ruhetanks" oder Mischkammern im Wasser weiterverteilt wird.

Durch die sehr rasche Verdünnbarkeit mit Wasser der erfindungsgemässen Präparate können viele grosstechnische, kontinuierlich durchgeführte Verfahren, bei denen die kationischen Copolymerisate eingesetzt werden, sehr rationell und mit optimaler Zudosierungsgeschwindigkeit durchgeführt werden. Besonders erwähnenswert ist auch, dass die erfindungsgemässen Präparate eine sehr hohe Konzentration an kationischen Polymerisaten aufweisen können; nebenbei kann noch die biologische Eliminierbarkeit der Präparate erwähnt werden. Die erfindungsgemässen Präparate zeichnen sich durch ihre Verdünnbarkeit mit Wasser und Verteilbarkeit in Wasser aus, und die Erfindung umfasst solche Präparate in beliebigen Konzentrationen, soweit sie noch mit Wasser verdünnbar sind bzw. die Copolymerisate in Wasser löslich oder dispergierbar bzw. gelöst oder dispergiert sind; insbesondere sind sowohl höher konzentrierte Präparate gemeint, vor allem solche die mindestens 10 Gew% kationisches Polymerisat enthalten, als auch vorverdünnte Präparate, vor allem solche die mindestens 0,001 Gew%, vorzugsweise mindestens 0,1 Gew% kationisches Polymerisat enthalten.

Die erfindungsgemässen Präparate sind in allen Gebieten der Technik einsetzbar, in denen kationische wasserlösliche Polymerisate verwendet werden, insbesondere sind sie als Flockungsmittel, vornehmlich zum Flockulieren von wässrigen Suspensionen, einsetzbar; die erfindungsgemässen Präparate zeichnen sich besonders durch ihre Retentionseigenschaften aus und weisen dazu auch gute Entwässerungseigenschaften auf, sie können daher mit Vorteil als Retentions- und Entwässerungsmittel zur Herstellung von Zellulosefasern- und Zellstoffgebilden eingesetzt werden. Ein weiterer Gegenstand der Erfindung ist also die Verwendung der erfindungsgemässen Präparate als Flokkungsmittel, vorzugsweise als Retentions- und Entwässerungsmittel für die Herstellung von Zellulosefaser- und Zellstoffgebilden, im wesentlichen Pappe und Papier; ausserdem eignen sie sich auch gut als Flockungsmittel für wässrige Schlämme, insbesondere Faulschlamm und Frischschlamm von kommunalen Kläranlagen. Weiter ist auch Gegenstand der Erfindung das Verfahren zur Herstellung von Zellulosefaser- bzw. Zellstoffgebilden, insbesondere Pappe und vorzugsweise Papier, das dadurch gekennzeichnet ist, dass man als Retentions- und/oder Entwässerungsmittel ein erfindungsgemässes Präparat einsetzt.

Bei der Herstellung von Papier, insbesondere bei der kontinuierlichen Herstellung von Papierbahnen, unter Einsatz der erfindungsgemässen Präparate kann man eine besonders homogene Blattbildung beobachten.

Die erforderliche Konzentration des Präparates für die jeweilige Anwendung richtet sich selbstverständlich nach der Konzentration Aktivsubstanz (Copolymerisat) für die jeweilige Flockung. Der pH-Wert bei der Ausflockung kann in üblichen Bereichen variieren, vornehmlich im schwach-alkalischen bis sauren Bereich je nach Einsatzgebiet (bevorzugt nahezu neutral).

In den folgenden Beispielen bedeuten die Teile, wenn nicht anders angegeben, Gewichsteile und die Prozente Gewichtsprozente; die Temperaturen sind in Celsiusgraden angegeben. Die eingesetzten Produkte sind, wenn nicht anders angegeben, handelsübliche Produkte. Gewichtsteile stehen zu Volumenteilen wie g zu ml.

Beispiel 1

16 Teile Emulgator (b') werden mit 1200 Teilen Wasser vermengt, wobei eine sehr feine, opaleszierende Emulsion entsteht. Nun werden zur Bildung des Calciumsalzes vom Emulgator (b') 8 Teile Calciumchlorid zugefügt. Man beobachtet sofort eine starke Ausfällung, die der Bildung des wasserunlöslichen (oellöslichen) Calciumsulfonates entspricht. Anschliessend werden unter Rühren 408 Teile White Spirit (c') zugegeben. Es bildet sich eine Wasser-in-Oel-Emulsion, die durch Zugabe von 27 Teilen Emulgator (d') stabilisert

wird. Dieser Wasser-in-Oel-Emulsion werden sodann in der angegebenen Reihenfolge 120 Teile einer 50%igen wässrigen N,N-Dimethylaminopropylmethacrylamidhydrochloridlösung, 454 Teile Acrylamid, 1,4 Teile Aethylendiamin--tetraessigsäure Di-natriumsalz, 0,7 Teile Eisen-(III)-sulfat und 0,7 Teile Tert.-butylhydroperoxid zugefügt. Der pH-Wert der wässrigen Phase beträgt ca. 3,0. Dann wird die erhaltene Dispersion mit Stickstoff inertisiert und auf 35° erwärmt. Sobald diese Temperatur erreicht ist, beginnt man mit dem Zutropfen von einer von Luft befreiten Lösung von 2,7 Teilen Natriumthiosulfat in 50 Teilen Wasser. Die Zugabe erfolgt innert 8 Stunden, wobei die Temperatur durch Kühlen zwischen 35 und 50° gehalten wird.

Nach der Zugabe der Natriumthiosulfatlösung ist die Polymerisationsreaktion beendet. Man erhält eine stabile, feine dünnflüssige Polymerdispersion, die eine Viskosität von 1000 cp aufweist (Brookfield, Spindel 3, 50 U/Min.). Das Produkt ist sehr gut mit Wasser verdünnbar; ca. 30-40 Sekunden nach der Zugabe zu kaltem Wasser ist bereits die maximale Viskosität bei einer 1:200 (=0,5%igen) wässrigen Verdünnung erreicht. Die Viskosität eines frisch hergestellten 1:100 verdünnten (=1%igen) wässrigen Präparates beträgt ca. 500 cp (Brookfield, Spindel Nr. 3, 60 U/Min.).

Beispiel 2

In ein 1500 Volumenteile Reaktionsgefäss werden 97 Teile Acrylamid, 28 Teile einer 50%igen N,N-Dimethylaminopropylmethacrylamid-hydrochloridlösung, 376 Teile Wasser und 1 Teil Aethylendiamin-tetraessigsäure Di-natriumsalz eingewogen. Nachdem alles gelöst ist, wird unter Rühren der pH mit Salzsäure auf 3,0 eingestellt. Danach wird der Monomerlösung unter gutem Rühren einer Lösung bestehend aus 8 Teilen Emulgator (b'), 9 Teilen Emulgator (d') und 202 Teilen White Spirit (c') zugegeben. Es bildet sich eine dünnflüssige, milchartige Emulsion. Diese wird durch dreimaliges Evakuieren auf ca. 20 mbar und anschliessendem Entlasten mit Stickstoff vom Luftsauerstoff befreit. Während der gesamten Dauer der Polymerisation wird über die Emulsion ein Stickstoffstrom geleitet. Nun wird auf 50° erwärmt und unter starkem Stickstoffstrom werden 0,4 Teile $\alpha,\alpha'$-Azoisobutyronitril, gelöst in 4 Teilen Aceton, zugegeben. Man lässt 3 Stunden bei 50-55° reagieren. Nach

ca. 1/2 Stunde wird die Emulsion viskos und leicht exotherm. Die Heizung kann für ca. 1/2 Stunde entfernt werden. Nach 3 Stunden erhält man ein gut giessbares Produkt. Die Viskosität ist 250 cp (Brookfield, Spindel Nr. 4, 50 U/Min.).

Beispiel 3

In ein 1500 Volumenteile Reaktionsgefäss werden 4 Teile Emulgator (b') mit 478 Teilen Wasser vermengt, wobei eine sehr feine, opaleszierende Emulsion entsteht. Nun werden zur Bildung des Calciumsalzes vom Emulgator (b') 0.75 Teile Calciumchlorid zugefügt. Nachher werden 97 Teile Acrylamid, 28 Teile einer 50%igen N,N-Dimethylaminopropylmethacrylamidhydrochloridlösung und 1 Teil Aethylendiamintetraessigsäure Di-natriumsalz eingewogen. Nachdem alles gelöst ist, wird unter Rühren der pH mit Salzsäure auf 3,0 eingestellt. Danach wird der Monomerlösung unter gutem Rühren eine Lösung bestehend aus 9 Teilen Emulgator (d') und 202 Teilen White Spirit (c') zugegeben. Es bildet sich eine dünnflüssige, milchartige Emulsion. Diese wird durch dreimaliges Evakuieren auf ca. 20 mbar und anschliessendem Entlasten mit Stickstoff vom Luftsauerstoff befreit. Während der gesamten Dauer der Polymerisation wird über die Emulsion ein Stickstoffstrom geleitet. Nun wird auf 50° erwärmt und unter starkem Stickstoffstrom 0,4 Teile $\alpha,\alpha'$-Azo-isobutyronitril, gelöst in 4 Teilen Aceton, zugegeben. Anschliessend kann der Stickstoffstrom wieder gedrosselt werden. Man lässt 3 Stunden bei 50-55° reagieren. Nach ca. 1/2 Stunde wird die Emulsion viskos und leicht exotherm. Die Heizung kann für ca. 1/2 Stunde entfernt werden. Nach 3 Stunden erhält man ein gut giessbares Produkt. Die Viskosität ist 350 cp (Brookfield, Spindel Nr. 4, 50 U/Min.).

Analog wie in den Beispielen 1 bis 3 werden die Präparate folgender Zusammensetzung hergestellt:

Beispiel 4

| | |
|---|---|
| 96,5 | Teile Acrylamid, |
| 11,5 | Teile N,N-Dimethylaminopropylmethacrylamid, |

| | | |
|---|---|---|
| 1 | Teil | Aethylendiamintetraessigsäure-dinatriumsalz, |
| 0,75 | Teile | Calciumchlorid, |
| 3,3 | Volumenteile | Schwefelsäure, |
| 14 | Teile | Emulgator (d'), |
| 206 | Teile | geruchloses White Spirit (c'), |
| 4 | Teile | Emulgator (b'), |
| 0,4 | Teile | Azo-isobutyronitril gelöst in 4 Volumenteilen Aceton, |
| 402,4 | Teile | Wasser |

Beispiel 5

| | | |
|---|---|---|
| 103,3 | Teile | Acrylamid, |
| 15 | Teile | einer 50%igen Lösung von N,N-Dimethylaminopropylmethacrylamidhydrochlorid, |
| 1 | Teil | Aethylendiamintetraessigsäure-dinatriumsalz, |
| 0,75 | Teile | Calciumchlorid, |
| 1,3 | Volumenteile | Salzsäure 1 n, |
| 27 | Teile | Emulgator (d'), |
| 110 | Teile | White Spirit (c'), |
| 4 | Teile | Emulgator (b'), |
| 0,4 | Teile | Azo-isobutyronitril gelöst in 2 Volumenteilen Chloroform, |
| 478 | Teile | Wasser |

Die Viskosität des frisch hergestellten, 1:100 verdünnten (1%igen) wässrigen Präparates beträgt ca. 350 cps (Brookfield, Spindel Nr. 4, 100 U/Min). Das durchschnittliche Molekulargewicht $M_N$ (Nummerndruchschnitt) beträgt $2,1x10^6$ und $M_W$ (Gewichtsdurchschnitt) beträgt $10,5x10^6$.

Beispiel 6

| | | |
|---|---|---|
| 96,5 | Teile | Acrylamid, |
| 48,0 | Teile | einer 50%igen Lösung von N,N-Dimethylaminopropylmethacrylamidhydrochlorid, |
| 1 | Teil | Aethylendiamintetraessigsäure-dinatriumsalz, |

| | | |
|---|---|---|
| 0,75 | Teile | Calciumchlorid, |
| 3,3 | Volumenteile | Schwefelsäure 1 n, |
| 7 | Teile | Emulgator (d'), |
| 6 | Teile | Emulgator (d"), |
| 220 | Teile | White Spirit (c'), |
| 4 | Teile | Emulgator (b'), |
| 0,4 | Teile | Azo-isobutyronitril gelöst in 4 Volumenteilen Aceton, |
| 380,4 | Teile | Wasser. |

Beispiel 7

| | | |
|---|---|---|
| 107,7 | Teile | Acrylamid, |
| 6,3 | Teile | einer 50%igen Lösung von N,N-Dimethylaminopropylmethacrylamidhydrochlorid, |
| 1 | Teil | Aethylendiamintetraessigsäure-dinatriumsalz, |
| 0,75 | Teile | Calciumchlorid, |
| 1,75 | Volumenteile | Salzsäure 1 n, |
| 27 | Teile | Emulgator (d'), |
| 110 | Teile | White Spirit (c'), |
| 4 | Teile | Emulgator (b'), |
| 0,4 | Teile | Azo-isobutyronitril gelöst in 2 Volumenteilen Chloroform, |
| 484,5 | Teile | Wasser. |

Beispiel 8

| | | |
|---|---|---|
| 96,8 | Teile | Acrylamid, |
| 28,0 | Teile | einer 50%igen Lösung von N,N-Dimethylaminopropylmethacrylamidhydrochlorid, |
| 1 | Teil | Aethylendiamintetraessigsäure-dinatriumsalz, |
| 0,75 | Teile | Calciumchlorid, |
| 1,8 | Volumenteile | Salzsäure 1 n, |
| 14 | Teile | Emulgator (d'), |
| 206 | Teile | White Spirit (c'), |
| 4 | Teile | Emulgator (b'), |

| | | |
|---|---|---|
| 0,4 | Teile | Azo-isobutyronitril gelöst in 4 Volumenteilen Chloroform, |
| 386,7 | Teile | Wasser. |

Die Viskosität des frisch hergestellten, 1:100 verdünnten (1%igen) wässrigen Präparates beträgt ca. 200 cp (Brookfield, Spindel Nr. 4, 100 U/Min). Das durchschnittliche Molekulargewicht $M_N$ (Nummerndurchschnitt) beträgt $2,4x10^6$ und $M_W$ (Gewichtsdurchschnitt) beträgt $8,9x10^6$.

Beispiel 9

| | | |
|---|---|---|
| 110 | Teile | Acrylamid, |
| 0,53 | Teile | N,N-Dimethylaminopropylmethacrylamid, |
| 1 | Teil | Aethylendiamintetraessigsäure-dinatriumsalz, |
| 0,20 | Teile | Calciumchlorid, |
| 1 | Volumenteil | Salzsäure 1 n, |
| 6 | Teile | Emulgator (d"'), |
| 14 | Teile | Emulgator (d'), |
| 110 | Teile | White Spirit (c'), |
| 1 | Teil | Emulgator (b'), |
| 0,4 | Teile | Azo-isobutyronitril gelöst in 4 Volumenteilen Aceton, |
| 485 | Teile | Wasser. |

Beispiel 10

| | | |
|---|---|---|
| 96,5 | Teile | Acrylamid, |
| 48,0 | Teile | einer 50%igen Lösung von N,N-Dimethylaminopropylmethacrylamidhydrochlorid, |
| 1 | Teil | Aethylendiamintetraessigsäure-dinatriumsalz, |
| 0,75 | Teile | Calciumchlorid, |
| 3,3 | Volumenteile | Schwefelsäure 1 n, |
| 9 | Teile | Emulgator (d'), |
| 9 | Teile | Emulgator (d"), |
| 220 | Teile | White Spirit (c'), |
| 4 | Teile | Emulgator (b'), |

| | |
|---|---|
| 0,4 | Teile Azo-isobutyronitril gelöst in 4 Volumenteilen Aceton, |
| 380,4 | Teile Wasser. |

Die Viskosität des frisch hergestellten, 1:100 verdünnten (1%igen) wässrigen Präparates beträgt ca. 60 cp (Brookfield, Spindel Nr. 4, 100 U/Min); $M_N = 1,7x10^6$; $M_W = 11,4x10^6$.

Beispiel 11

| | |
|---|---|
| 131,0 | Teile Acrylamid, |
| 15,6 | Teile N,N-Dimethylaminopropylmethacrylamid, |
| 0,2 | Teile Aethylendiamintetraessigsäure-dinatriumsalz, |
| 0,75 | Teile Calciumchlorid, |
| 10,6 | Volumenteile Salzsäure (30%ig), |
| 20,3 | Teile Emulgator (d'), |
| 87,5 | Teile White spirit (c'), |
| 101,9 | Teile Isoparaffin (c"), |
| 3,8 | Teile Emulgator (b'), |
| 0,04 | Teile 2,2'-Azo-bis-(2-amidinopropan)dihydrochlorid in 5 Teilen Wasser, |
| 623,4 | Teile Wasser. |

Die Viskosität des frisch hergestellten, 1:100 verdünnten (1%igen) wässrigen Präparates beträgt ca. 130 cp (Brookfield, Spindel Nr. 4, 100 U/Min); $M_N = 2,2x10^6$; $M_W = 9,9x10^6$.

Verwendete Emulgatoren

| | | |
|---|---|---|
| Emulgator (b'): | 62%ige Lösung eines Petroleumsulfonates (Monosulfonat) in Form des Natriumsalzes, mit Molekulargewicht 440-470, in Mineralöl | |
| Emulgator (d'): | $C_{12}H_{25}$ $(OCH_2-CH_2)_2$ OH | HLB=6,5 |
| Emulgator (d"): | Sorbitanmonooleat | HLB=4,0 |
| Emulgator (d"'): | $C_{18}-H_{35}$ $(O-CH_2-CH_2)_3$ OH | HLB=6,5 |

## Verwendete Oele

White Spirit (c'): aromatenfreies Terpenalin, Siedebereich 193-247°, mittleres Molekulargewicht 173.

Isoparaffin (c"): isoparaffinisches Oel, Siedebereich 210-260°, Anilinpunkt = 88°, Isoparaffingehalt = 80%, Dichte = 0,78.

## Anwendungsbeispiel A

Es wird ein 1,5%iger wässriger Papierbrei folgender Feststoffzusammensetzung verwendet:

70 Teile gebleichter Holzschliff
30 Teile gebleichter Sulfitzellstoff
15 Teile Kaolin.

Vor der Blattbildung auf dem Rapid-Koethen-Blattbildner werden 250 ml Prüfstoff dem Prüfstoffvorrat entnommen und mit 1% (bezogen auf Holzschliff und Sulfitzellstoff) einer handelsüblichen Emulsion eines synthetischen Leimes (Emulsion eines dimeren Alkylketens) vermischt. Anschliessend werden 5,0 ml einer 0,05%igen wässrigen Lösung des im Beispiel 8 beschriebenen Produktes, sowie 750 ml Verdünnungswasser dem Papierstoff zugefügt.

Nach einer Rührzeit von 5 Sekunden bei 250 U/Min. wird das Stoff/Wassergemisch in die Füllkammer des Blattbildners (System Rapid-Koethen) überführt, wobei in der Füllkammer 3 l Wasser vorgelegt sind. Nach einer Verweilzeit von 20 Sekunden wird durch Betätigen des Absaugeventils das Blatt gebildet.

Das gebildete Blatt ist sehr homogen und die Füllstoffretention ist hoch. Verfährt man wie beschrieben, aber unter Einsatz von 20ml (statt 5,0ml) der 0,05%igen Lösung des Produktes vom Beispiel 8, so ist, bei homogener Blattbildung, die Füllstoffretention noch höher.

Auf analoge Weise werden die Produkte der Beispiele 1-7, 8-11 eingesetzt.

Anwendungsbeispiel B

125 ml eines 1,5%igen wässrigen Papierbreies mit der gleichen Feststoffzusammensetzung wie unter Beispiel A beschrieben, werden mit 875 ml Wasser, die 5,0 ml einer 0,05%igen wässrigen Lösung des im Beispiel 5 beschriebenen Produktes enthalten, unmittelbar (ca. 20 Sekunden) vor der Prüfung vermengt und auf dem Schopper-Riegler-Gerät entwässert.

Man erhält ein homogenes Papierblatt bei rascher und guter Entwässerung. Verwendet man statt 5,0ml 20ml der 0,5%igen Lösung des Produktes von Beispiel 5, so ist bei homogener Blattbildung die Entwässerungszeit noch kürzer.

Auf analoge Weise werden die Produkte der Beispiele 1-4 und 6-11 eingesetzt.

Anwendungsbeispiel C

133 g einer 8%igen Faulschlammsuspension einer kommunalen Kläranlage werden in einem Messzylinder von 250 ml Inhalt mit 40 ml einer 0,2%igen wässrigen Lösung des Produktes gemäss Beispiel 8 versetzt und anschliessend auf einer mit einem Orlonfilter beschichteten Büchner-Porzellan-Nutsche, Durchmesser 9 cm, filtriert (Schwerkraftfiltration); man erhält in kurzer Zeit eine gute Entwässerung des Schlammes.

Auf analoge Weise werden die Produkte der Beispiele 1-7 und 9-11 eingesetzt.

Anwendungsbeispiel D

Es wird ein 1%iger wässriger Papierbrei folgender Feststoffzusammensetzung verwendet:

100 Teile gebleichter Sulfitzellstoff
20 Teile Calciumcarbonat

Vor der Blattbildung auf dem Rapid-Köthen-Blattbildner werden 250 ml Prüfstoff dem Prüfstoffvorrat entnommen und mit 1% (bezogen auf den Sulfitzellstoff) einer handelsüblichen Emulsion eines synthetischen Leimes (Emulsion eines dimeren Alkylketens) vermischt. Anschliessend werden 2,5ml einer 0,05%igen wässrigen Lösung des im Beispiel 8 beschriebenen Produktes sowie 750 ml Verdünnungswasser dem Papierstoff zugefügt. Nach einer Rührzeit von 5 Sekunden bei 250 U/Min. wird das Stoff/Wasser-Gemisch in die Füllkammer des Blattbildners (System Rapid-Koethen) überprüft, wobei in der Füllkammer 3 l Wasser vorgelegt sind. Nach einer Verweilzeit vom ca. 20 Sekunden wird durch Betätigen des Absaugeventils das Blatt gebildet.

Man beobachtet, bei guter Füllstoffretention, eine homogene Blattbildung. Wiederholt man dieses Verfahren, aber unter Einsatz von 5,0ml, 7,5ml und 10,0ml der 0,05%igen wässrigen Lösung des Produktes von Beispiel 8, so wird eine Steigerung der Retention, bei homogener Blattbildung, beobachtet.

Auf analoge Weise werden die Produkte der Beispiele 1-7 und 9-11 eingesetzt.

Anwendungsbeispiel E

Es wird ein 2%iger wässriger Papierbrei folgender Feststoffzusammensetzung verwendet:

100 Teile gebleichter Sulfitzellstoff
20 Teile Kaolin
3 Teile Harzleim
2 Teile Aluminiumsulfat

Vor der Blattbildung auf dem Rapid-Koethen Blattbildner werden 250 ml Prüfstoff mit 5ml einer 0,0125%igen wässrigen Verdünnung des Produktes gemäss Beispiel 8 sowie mit 750 ml Verdünnungswasser vermengt. Nach einer Rührzeit von 5 Sekunden bei 250 U/Min. wird das Stoff-Wasser-Gemisch in die Füllkammer des Blattbildners (System Rapid-Koethen) überführt, wobei in der

Füllkammer 3 l Wasser vorgelegt sind. Nach einer Haltezeit von 20 Sekunden wird durch Betätigen des Absaugeventils das Blatt gebildet; nach Bildung der Prüfblätter werden diese verascht.

Auf analoge Weise werden die Produkte der Beispiele 1-7 und 9-11 eingesetzt.

Man beobachtet bei hoher Füllstoffretention eine homogene Blattbildung. Wiederholt man dieses Verfahren, aber unter Einsatz von 10ml, 15ml und 20ml der 0,0125%igen wässrigen Verdünnung des Produktes gemäss Beispiel 8, so beobachtet man jeweils bei homogener Blattbildung eine Steigerung der Füllstoffretention.

Patentansprüche

1. Mit Wasser verdünnbare, polymerisat- und tensidhaltige Präparate, dadurch gekennzeichnet, dass sie

als Polymerisat (a) ein kationisches Copolymerisat aus

($a_1$) Acryl- und/oder Methacrylamid
und ($a_2$) einem Monomeren der Formel

$$CH_2=CR_1-CO-NH-(CH_2)_n-N\begin{matrix} \diagup R_2 \\ \diagdown R_3 \end{matrix} \qquad (I)$$

worin $R_1$ Wasserstoff oder Methyl,
$R_2$ Methyl oder Aethyl,
$R_3$ Methyl oder Aethyl
und n 2 oder 3
bedeuten,

enthalten, wobei der molare Anteil von ($a_1$) im Copolymerisat 91 bis 99,8 Mol% ausmacht und der molare Anteil von ($a_2$) im Copolymerisat die restlichen 9 bis 0,2 Mol% ausmacht,
als Tensid (b) ein anionaktives Tensid enthalten, wobei der molare Anteil an anionaktivem Tensid (b) nicht grösser ist als der molare Anteil an kationischen Monomereinheiten vom Copolymerisat (a) und ein Teil der kationischen Monomereinheiten des Copolymerisates mit dem anionaktiven Tensid (b) zur Salzbildung vereint sein kann, und als Oel (c) ein mit Wasser nicht mischbares Oel enthalten, in dem das Polymerisat nicht löslich ist, aber darin fein verteilt ist.

2. Präparate nach Anspruch 1, dadurch gekennzeichnet, dass das anionaktive Tensid (b) ein sulfonierter Kohlenwasserstoff ist.

3. Präparate nach Ansprüchen 1-2, dadurch gekennzeichnet, dass sie als weitere wesentliche Komponenten

   (d) ein lipophiles bzw. öllösliches, nicht-ionogenes Tensid

   und/oder

   (e) Wasser

   und gegebenenfalls

   (f) ein mit Oel mischbares, in Wasser schwerlösliches und nicht-selbstdispergierbares, polares Lösungsmittel, das alleine keine Emulgatoreigenschaften aufweist, aber die Grenzflächenspannung Wasser/Oel erniedrigt

   enthalten.

4. Präparate nach Ansprüchen 1-3, dadurch gekennzeichnet, dass (c) ein Gemisch von Oelen ($c_1$) und ($c_2$) ist, das so gewählt ist, dass der O/W-EHLB-Wert von ($c_1$) grösser ist als der O/W-EHLB-Wert des Gemisches ($c_1$) + ($c_2$).

5. Präparate gemäss Ansprüchen 1-4 enthaltend mindestens 0,001 Gew.%, vorteilhaft mindestens 0,1 Gew.%, vorzugsweise mindestens 10 Gew.% der Komponente (a).

6. Verfahren zur Herstellung von Präparaten gemäss Anspruch 1, dadurch gekennzeichnet, dass man das Copolymere vor, während oder nach der Polymerisation mit dem anionaktiven Tensid (b) und dem Oel (c) versetzt.

7. Verfahren nach Anspruch 6 zur Herstellung von Präparaten gemäss Ansprüchen 1-5, dadurch gekennzeichnet, dass man

   α) eine ölige Dispersion, die ein hydrophiles, kationisches Polymerisat (a), Wasser (e) und ein lipophiles bzw. öllösliches, nicht-ionogenes Tensid (d) enthält, mit einem lipophilen bzw. öllösliches, praktisch wasserunlöslichen, anionaktiven Tensid ($b_2$) versetzt, wobei ($b_2$) ein sulfonierter Kohlenwasserstoff, gegebenenfalls in Salzform, ist und das Oel der öligen Dispersion ein Oel ($c_3$) ist, d.h. ein mit Wasser nicht mischbares Kohlenwasserstofföl, in dem das Polymerisat (a)

nicht löslich ist, aber darin mit dem Wasser fein verteilt ist, und gegebenenfalls die Komponente (f) zusammen mit ($b_2$) zugibt und/oder ($b_2$) als Lösung im Oel ($c_3$) zugibt;

oder

ß) die zur Bildung der kationischen Polymerisate (a) erforderlichen Monomeren in Gegenwart von anionaktiven Tensiden in W/O-Emulsion polymerisiert und gewünschtenfalls Wasser und/oder Oel abdestilliert und gegebenenfalls weitere Zusätze (a), (b), (c), (d), (e) und/oder (f) zugibt, wobei ein Teil der kationischen Monomeren gegebenenfalls als Monomersalze von anionaktiven Tensiden vorliegt.

8. Verwendung der Präparate gemäss Ansprüchen 1-5 als Flockungsmittel.

9. Verwendung nach Anspruch 8 bei der Herstellung von Papier.

10. Verwendung nach Anspruch 8 oder 9, dadurch gekennzeichnet, dass man die Präparate gemäss Ansprüchen 1-5 vorverdünnt und in der vorverdünnten Form zur Flockung einsetzt.

11. Verwendung nach Anspruch 10, dadurch gekennzeichnet, dass man die Präparate gemäss Ansprüchen 1-5 kontinuierlich vorverdünnt und zur Herstellung von Papier kontinuierlich zudosiert.

12. Verfahren zur Herstellung von Gebilden aus Zellulosefasern, durch Entwässern eines entsprechenden Faserbreies, dadurch gekennzeichnet, dass man ein Präparat gemäss Ansprüchen 1-5 dem wässrigen Faserbrei zugibt.

13. Verfahren nach Anspruch 12 zur Herstellung von Papier.

14. Die nach Ansprüchen 12-13 hergestellten Erzeugnisse.

15. Flockungsmittel gekennzeichnet durch einen Gehalt an Komponenten a), b) und c) und gegebenenfalls d), e) und/oder f) wie in den Ansprüchen 1-5 definiert.